# EUROPEAN PATENT APPLICATION

(11) **EP 3 722 523 A1**
(43) Date of publication of application: **14.10.2020**
(21) Application number: 20167504.8
(22) Date of filing: 01.04.2020
(51) Int. Cl.: E03B 7/00, G01M 3/00

(54) **LEAK DETECTION**

(30) Priority: 12.04.2019 GB 201905237
(71) Applicant: Homeserve PLC, Walsall, West Midlands WS2 7BN (GB)
(72) Inventor: BAILEY, Samuel, London, W6 9ST (GB); GRAY, Greer, Walsall, West Midlands WS2 7BN (GB)
(74) Representative: Pinney, Matthew David

(57) **Abstract**

A water flow detector, the water flow detector comprising a water header tank presence detection module for determining if a water header tank is present in a water system comprising a pipe, the water header tank presence detection module configured to: determine a plurality of pipe temperatures of the pipe based on temperature data received from a first temperature sensor coupled to the water header tank presence detection module, wherein first temperature sensor is in thermal contact with the pipe; determine a plurality of ambient temperatures of the environment around the pipe based on temperature data received from a second temperature sensor coupled to the water header tank presence detection module; determine a plurality of temperature deltas, each of the temperature deltas based on a difference between a pipe temperature of the plurality of pipe temperatures pipe and a corresponding ambient temperature of the plurality of ambient temperatures; detect a start of a period of non-usage of the water system; detect a flow of water in the pipe after the start of the period of non-usage of the water system; analyse a rate of change of the plurality of temperature deltas during the period of non-usage of the water system to detect an interval during which temperature deltas of the plurality of temperature deltas decrease at a rate above a first temperature delta threshold rate; and in response, output a tank indication to a leak detection module, the tank indication indicating that the water system comprises a water header tank.

## Description

### Technical Field

The present application relates to leak detection, and in particular techniques providing accurate detection of a leak in a water system comprising a pipe.

### Background

Known leak detection methods and devices are disclosed in PCT/GB2016/050021 (Bailey); PCT/GB2016/053892 (Bailey, Greer); and US 15/548982 (Tooms).

In particular, PCT/GB2016/050021 describes a device which when clipped on a water supply pipe detects that a flow is occurring after all normal expected usage has stopped, and hence that there is a leak in the pipe system.

The device described in Patent PCT/GB2016/050021 detects flow in the pipe by measuring the temperature of the pipe and the temperature of the surrounding air and determining if the pipe is being constantly cooled or heated by water flowing through the pipe.

### Summary

Being able to detect a leak anywhere on a plumbing system by detecting pipe flow on an incoming water supply when no flow is expected is advantageous, as a single sensor can detect a leak anywhere in an extensive pipework network, for example in an entire building.

The inventors have discovered that a limitation of such a system however is that when part of the pipe network is used to replenish a header or storage water tank (as happens in unvented domestic water systems), and the tank is particularly large or fills particularly slowly, then the flow to replenish the tank can take sufficiently long that it appears to be continuous flow after expected usage has stopped, and the flow to fill the tank can be confused for a leak. Some known systems may in this case erroneously output a leak indication to a user of the water system, or trigger an alarm, when in fact there is no leak in the water system.

It is therefore advantageous to be able to identify whether such a leak detector is fitted to a property which has a header tank, and if there is a header tank, to adjust the leak detection process to allow for this.

According to a first aspect of the present invention, there is provided a water flow detector, the water flow detector comprising a water header tank presence detection module for determining if a water header tank is present in a water system comprising a pipe, the water header tank presence detection module configured to: determine a plurality of pipe temperatures of the pipe based on temperature data received from a first temperature sensor coupled to said water header tank presence detection module, wherein first temperature sensor is in thermal contact with the pipe; determine a plurality of ambient temperatures of the environment around said pipe based on temperature data received from a second temperature sensor coupled to said water header tank presence detection module; determine a plurality of temperature deltas, each of said temperature deltas based on a difference between a pipe temperature of the plurality of pipe temperatures pipe and a corresponding ambient temperature of the plurality of ambient temperatures; detect a start of a period of non-usage of the water system; detect a flow of water in the pipe after the start of the period of non-usage of the water system; analyse a rate of change of the plurality of temperature deltas during the period of non-usage of the water system to detect an interval during which temperature deltas of the plurality of temperature deltas decrease at a rate above a first temperature delta threshold rate; and in response, output a tank indication to a leak detection module, said tank indication indicating that the water system comprises a water header tank..

Thus the water flow detector is able to discriminate between a genuine continuous leak, and flow which stops when the header tank fills.

Advantageously embodiments of the present disclosure provide a single unit, that can be quickly and easily installed by a user of a water system, to be able to determine if a water system has a water header tank. This may be advantageous in systems where it is challenging for the user to determine manually if a water header tank is present. Additionally, by the water flow detector having the capability to determine if a water header tank is present, this further provides the advantage that no user input is required. This is advantageous because a user may incorrectly input information (regarding whether or not the water system comprises a water header tank) into the water flow detector, which may eventually result in incorrect leak detections by the water flow detector. When the indication that the water system comprises a header tank is utilised by the water flow detector, the water flow detector can provide more accurate and reliable leak detection indications.

The water header tank presence detection module may be further configured to output said tank indication if, after a start of said interval, the water header tank presence detection module detects a temperature delta of the plurality of temperature deltas below a first temperature delta threshold value.

The water flow detector may further comprise at least one of the first temperature sensor and the second temperature sensor.

The water header tank presence detection module may further be configured to: determine said flow of water in the pipe by detecting at least one of: a rate of change of temperature deltas of the plurality of temperature deltas below a second temperature delta threshold rate; and a rate of change of the pipe temperature lower than a pipe temperature threshold rate.

The water header tank presence detection module may further be configured to determine if the detected temperature delta of the plurality of temperature deltas below a first temperature delta threshold value is approximating to a non-linear approach to zero, preferably the non-linear approach to zero being an exponential approach to zero.

The water header tank presence detection module may further be configured to: detect the start of the period of non-usage of the water system by: determining a first period during which there is a detected change in a polarity of a rate of change of the temperature of the pipe; and analyse a rate of change of the plurality of temperature deltas after said period to detect a second period during which temperature deltas of the plurality of temperature deltas are decreasing.

The water header tank presence detection module may be configured to: determine if the plurality of ambient temperatures is stable during said interval; and generate said tank indication only if the plurality of ambient temperature has been determined to be stable during said interval.

The water header tank presence detection module may further be configured to: analyse a rate of change of the plurality of ambient temperatures during said interval to detect a rate of change of ambient temperatures below an ambient temperature threshold rate and in response determine that the ambient temperature is stable during said interval.

The water header tank presence detection module may further be configured to: determine a fill time wherein the fill time is a time at which the header tank is determined to have stopped filling.

The water header tank presence detection module may further configured to: determine said fill time based on a detected ending of said flow of water in the pipe; or
determine said fill time based on a start time of said interval.

The water header tank presence detection module may further be configured to: determine a regression fit to: determine a first regression for the plurality of ambient temperatures; determine a second regression for the plurality of pipe temperatures; optionally wherein any of the first and second regressions are a straight line regression.

The water header tank presence detection module may further configured to: determine an r-squared value for each of the first and second regressions; determine if each of the determined r-squared values are above a regression threshold value; and output a tank indication if each of the determined r-squared values are determined to be above said regression threshold value.

The water header tank presence detection module may further configured to: determine a residual value for each of the first and second regressions; determine if each residual value is below a residual threshold value; and output a tank indication if each residual value is determined to be below said residual threshold value.

The water header tank presence detection module may further be not generate said tank indication if the water header tank presence detection module determines that a modulus of a rate of change of the plurality of temperature deltas during the period of non-usage is above a third temperature delta threshold rate.

The water header tank presence detection module may further configured to not generate said tank indication if the water header tank presence detection module detects a simultaneous change in plurality of air temperatures and the plurality of pipe temperatures during said period of non-usage.

The tank indication may indicate a likelihood that the water system comprises a header tank.

A remote leak detection unit may comprise the leak detection module, and the water header tank presence detection module may be configured to output the tank indication to the leak detection module via a communications interface on said water flow detector.

The water flow detector may comprise said leak detection module.

The leak detection module may be configured to: receive the tank indication, indicating that the water system comprises a water header tank; in response to receiving said tank indication, the leak detection module configured to: determine a measurement time of a temperature delta of the plurality of temperature deltas; determine if the measurement time is later than a convergence time length after said fill time; determine if said temperature delta of the plurality of temperature deltas is greater than a second temperature delta threshold value; determine there is a leak in the water system if: the first time is later than the defined time length after the fill time; and said temperature delta of the plurality of temperature deltas is above a second temperature delta threshold value; in response to determining there is a leak in the water system, output a leak indication.

The leak detection module may be configured to determine there is not a leak if: the first time is later than the defined time period after the fill time; and said temperature delta of the plurality of temperature deltas is below the second temperature delta threshold value. The leak detection module is configured to determine that the presence of a leak is unknown if the first time is earlier than the defined time length after the fill time.

According to another aspect of the present invention, there is provided a method for generating an indication that a water header tank is present in a water system comprising a pipe, the method comprising: determining a plurality of pipe temperatures of the pipe based on temperature data received from a first temperature sensor coupled to a water header tank presence detection module, wherein first temperature sensor is in thermal contact with the pipe; determining a plurality of ambient temperatures of the environment around said pipe based on temperature data received from a second temperature sensor coupled to said water header tank presence detection module; determining a plurality of temperature deltas, each of said temperature deltas based on a difference between a pipe temperature of the plurality of pipe temperatures pipe and a corresponding ambient temperature of the plurality of ambient temperatures; detecting a start of a period of non-usage of the water system;
detecting a flow of water in the pipe after the start of the period of non-usage of the water system; analysing a rate of change of the plurality of temperature deltas during the period of non-usage of the water system to detect an interval during which temperature deltas of the plurality of temperature deltas decrease at a rate above a first temperature delta threshold rate; and in response, outputting a tank indication to a leak detection module, said tank indication indicating that the water system comprises a water header tank.

According to another aspect of the present invention, there is provided a non-transitory computer-readable medium for determining if a water header tank is present in a water system comprising a pipe, the non-transitory computer-readable medium storing instructions that, when executed by a processor, cause the processor to: determine a plurality of pipe temperatures of the pipe based on temperature data received from a first temperature sensor coupled to said water header tank presence detection module, wherein first temperature sensor is in thermal contact with the pipe; determine a plurality of ambient temperatures of the environment around said pipe based on temperature data received from a second temperature sensor coupled to said water header tank presence detection module; determine a plurality of temperature deltas, each of said temperature deltas based on a difference between a pipe temperature of the plurality of pipe temperatures pipe and a corresponding ambient temperature of the plurality of ambient temperatures; detect a start of a period of non-usage of the water system; detect a flow of water in the pipe after the start of the period of non-usage of the water system; analyse a rate of change of the plurality of temperature deltas during the period of non-usage of the water system to detect an interval during which temperature deltas of the plurality of temperature deltas decrease at a rate above a first temperature delta threshold rate; and in response, output a tank indication to a leak detection module, said tank indication indicating that the water system comprises a water header tank.

The instructions may be provided on a carrier such as a disk, CD- or DVD-ROM, programmed memory such as read-only memory (Firmware), or on a data carrier such as an optical or electrical signal carrier. Code (and/or data) to implement embodiments of the invention may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language.

According to another aspect of the present invention, there is provided a leak detection unit comprising a leak detection module for detecting a leak in a water system comprising a pipe, the leak detection module configured to: receive a tank indication indicating that the water system comprises a water header tank; in response to receiving said tank indication, the leak detection module is further configured to: determine a value of a temperature delta at a first time based on received temperature data, wherein the temperature delta is based on a difference between a received pipe temperature generated by a first temperature sensor in thermal contact with the pipe at a first time and a corresponding received ambient temperature of the environment around said pipe generated by a second temperature sensor; determine if the first time is later than a defined time length after a fill time, wherein the fill time is a time at which the header tank is determined to have stopped filling; determine if said temperature delta is greater than a temperature delta threshold value; determine that there is a leak in the water system if: the first time is later than the defined time length after the fill time; and said temperature delta is larger than the temperature delta threshold value;
in response to detecting that there is a leak in the water system, output a leak indication.

The leak detection module may be configured to receive said tank indication from said water header tank presence detection module of previous aspects of the invention. The tank indication may be received from a remote water flow detector in communication with the leak detection unit via communications interface on said leak detection unit.

The leak detection module may be configured to determine there is not a leak if: the first time is later than the defined time period after the fill time; and the temperature delta is smaller than the temperature delta threshold value.

The leak detection module may be configured to determine that the presence of a leak is unknown if the first time is earlier than the defined time length after the fill time.

According to another aspect of the present invention, there is provided a method for detecting a leak in a water system comprising a pipe, the method comprising: receiving a tank indication indicating that the water system comprises a water header tank; in response to receiving said tank indication: determining a value of a temperature delta at a first time based on received temperature data, wherein the temperature delta is based on a difference between a received pipe temperature generated by a first temperature sensor in thermal contact with the pipe at a first time and a corresponding received ambient temperature of the environment around said pipe generated by a second temperature sensor; determining if the first time is later than a defined time length after a fill time, wherein the fill time is a time at which the header tank is determined to have stopped filling; determining if said temperature delta is greater than a temperature delta threshold value; determining that there is a leak in the water system if: the first time is later than the defined time length after the fill time; and said temperature delta is larger than the temperature delta threshold value; in response to detecting that there is a leak in the water system, output a leak indication.

According to another aspect of the present invention, there is provided a non-transitory computer-readable medium for detecting a leak in a water system comprising a pipe, the non-transitory computer-readable medium storing instructions that, when executed by a processor, cause the processor to: receive a tank indication indicating that the water system comprises a water header tank; in response to receiving said tank indication, the leak detection module is further configured to: determine a value of a temperature delta at a first time based on received temperature data, wherein the temperature delta is based on a difference between a received pipe temperature generated by a first temperature sensor in thermal contact with the pipe at a first time and a corresponding received ambient temperature of the environment around said pipe generated by a second temperature sensor; determine if the first time is later than a defined time length after a fill time, wherein the fill time is a time at which the header tank is determined to have stopped filling; determine if said temperature delta is greater than a temperature delta threshold value; determine that there is a leak in the water system if: the first time is later than the defined time length after the fill time; and said temperature delta is larger than the temperature delta threshold value; in response to detecting that there is a leak in the water system, output a leak indication.

The instructions may be provided on a carrier such as a disk, CD- or DVD-ROM, programmed memory such as read-only memory (Firmware), or on a data carrier such as an optical or electrical signal carrier. Code (and/or data) to implement embodiments of the invention may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language.

### Brief description of the drawings

For a better understanding of the present disclosure and to show how embodiments may be put into effect, reference is made to the accompanying drawings in which:
Figure 1 shows an example implementation of a fluid flow detection system.
Figure 2a shows a method for determining a temperature delta.
Figure 2b shows a method for determining if a water system comprises a header tank.
Figure 3 shows a time series of ambient temperature and pipe temperature data points which can used to indicate if a water system comprises a header tank and indicate if the water system has a leak.
Figure 4 shows a graph of pipe temperature and ambient temperature data points over time for a system where a leak is present.
Figure 5 shows a graph of pipe temperature and ambient temperature data points over time for a system where no leak is present.
Figure 6 shows a graph of pipe temperature and ambient temperature data points over time for a system likely comprising a water header tank.
Figure 7 shows a graph of pipe temperature and ambient temperature data points over time for a system likely comprising a water header tank with no leak.
Figure 8 shows a method for determining if a water system comprising a header tank has a leak.

### Detailed description

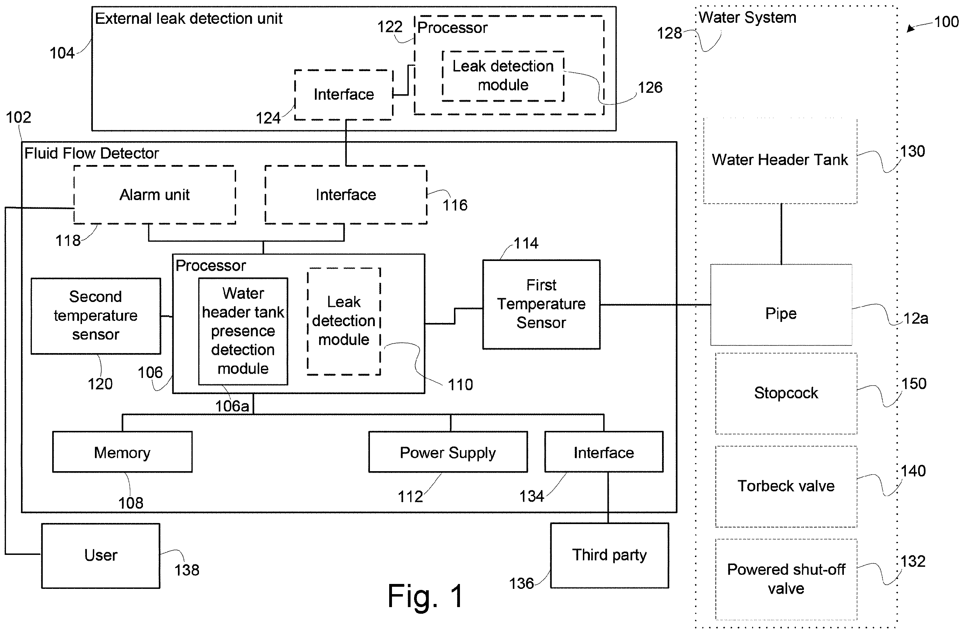

Figure 1 shows an example implementation of a fluid flow detection system 100. Fluid flow detection system 100 comprises a water system 128 and a fluid flow detector 102.

Fluid flow detection system 100 may optionally further comprise an external leak detection unit 104. Alternatively the fluid flow detector 102 may comprise a leak detection module 110 configured to perform leak detection itself (and thus the fluid flow detection system 100 may not comprise the external leak detection unit 104).

Fluid flow detector 102 comprises a processor 106, a first temperature sensor 114, a second temperature sensor 120, memory 108, and a power supply 112. Fluid flow detector 102 may further comprise an alarm unit 118 and an interface 116.

Processor 106 comprises a water header tank presence detection module 106a. Water header tank presence detection module 106a comprises code which detects the presence of a water header tank in the water system 128 when the code is run.

Processor 106 comprises leak detection module 110. Leak detection module 110 comprises code which detects a leak in water system 128. Processor 106 is connected to a first temperature sensor 114. The first temperature sensor 114 is in thermal contact with a pipe 12a of a water system 128. The processor 106 may be connected to the first temperature sensor 114 by way of a wired or wireless connection. Whilst Figure 1 shows the first temperature sensor 114 as being housed within the fluid flow detector 102 this is merely an example, and it will be appreciated that the first temperature sensor 114 may be remote from the fluid flow detector 102 but nevertheless coupled to the processor 106.

Processor 106 is connected to a second temperature sensor 120. The second temperature sensor 120 is configured to detect the ambient temperature (e.g. the air temperature) around the pipe 12a. The processor 106 may be connected to the second temperature sensor 120 by way of a wired or wireless connection. Whilst Figure 1 shows the second temperature sensor 120 as being housed within the fluid flow detector 102 this is merely an example, and it will be appreciated that the second temperature sensor 120 may be remote from the fluid flow detector 102 but nevertheless coupled to the processor 106.

Both temperature sensors 114 and 120 may be configured to detect temperature at irregular or regular time intervals. Processor 106 receives temperature readings from the first temperature sensor 114 and the second temperature sensor 120. Processor 106 may receive the readings after each reading has taken place or in groups of multiple readings.

Processor 106 is connected to a memory 108. Memory 108 is configured to store the code which causes the processor to determine if a water system 128 comprises a water header tank 130. Memory 108 also stores temperature readings received by the processor from the first and second temperature sensors (114, 120).

Processor 106 may optionally be connected to a leak detection module 110, where leak detection module 110 is housed in the fluid flow detector 102.

Processor 106 may be connected to an alarm unit 118 which is configured to alert a user that a leak is present in the water system 128.

In embodiments whereby the fluid flow detection system 100 comprises the external leak detection unit 104, the fluid flow detector 102 comprises an interface 116 coupled to the processor 106. Interface 116 enables a wired or wireless connection to be made to an interface 124 of the external leak detection unit 104.

First temperature sensor is in thermal contact with a pipe 12a of water system 128. The pipe may be an inlet pipe to the water system meaning that all water entering the system must enter via the pipe 12a.

Water system 128 comprises a pipe 12a, and may further comprise a water header tank 130. The water system may be a network of pipes and appliances connected to the pipe network. For example, the appliances may be radiators, toilets, showers. The water supply system may further comprise a stopcock 150, a valve 140 such as a Torbeck valve, and/or a powered shut-off valve 132 which may be controlled for example by processing means (preferably comprising one or more processors).

The power supply 112 may be coupled to a mains network and/or may comprise a battery(s). The alarm unit 118 is shown in the fluid flow detector system, e.g., in a device housing at least the processing means, however such an alarm generator may additionally or alternatively be provided at a remote entity. The alarm unit 118 may send an alarm preferably, wirelessly, to a user 138. The fluid flow detector system, e.g., a device comprising at least the processing means, may comprise an interface 134 comprising a transmitter and/or receiver, preferably wireless, for communication with a third party 136 (e.g., remote alarm signal receiving station, cloud). Processor 106 is connected to power supply 112.

Pipe 12a may be connected to water header tank 130. Pipe 12a is in thermal contact with the first temperature sensor 114 of the fluid flow detector 102. A water header tank may be referred to as a storage tank, water storage tank, header tank etc. A water header tank is used in some water systems (for example a house or an office) to provide readily available water and to provide an appropriate level of water pressure. A water header tank may allow for the expansion and contraction of the water in a hot water tank that does not have an expansion vessel. This lowers the risk of the hot water tank being at risk of exploding. A water header tank may further allow a water system to operate at a lower pressure than would be possible without a water header tank. This is advantageous because a water system operating at a lower pressure means that the components of the water system generally do not have to be as high specification as the components of a water system operating at a higher pressure. For example, a water header tank may allow a water system to fill a bath quicker than a water system without a water header tank. However, a water header tank may not necessarily improve the operating of a shower in a water system. This is because a bath fills using a high flow rate of water with a low pressure, whereas a shower operates using a higher pressure with a lower flow rate.

As noted above, the fluid flow detection system 100 may comprise an external leak detection unit 104. The external leak detection unit 104 comprises a processor 122, leak detection module 126 and an interface 124. Interface 124 is in connection with interface 116 of the fluid flow detector 102. Processor 122 is connected to interface 124 and leak detection module 126.

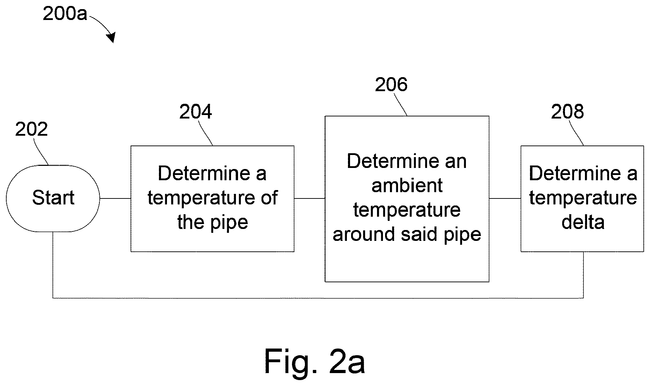

Fig. 2a shows a flow diagram 200a. Flow diagram 200a shows a method of determining a temperature delta performed by the water header tank presence detection module 106a. The method starts at step 202, although as explained in further detail below, the process may be a continuous process. The water header tank presence detection module 106a receives temperature information from the first temperature sensor 114 and determines a temperature of the pipe 12a (step 204). The water header tank presence detection module 106a further receives temperature information from the second temperature sensor 120 and determines an ambient temperature (step 206). The water header tank presence detection module 106a determines a temperature delta (step 208), which is a difference between the temperature of the pipe determined in step 204 and the ambient temperature determined in step 206, where the determined pipe temperature and determined ambient temperature have both been measured at the same time or within a predefined time period. In one example, the determined pipe temperature (from step 204) and the determined ambient temperature (from step 206) correspond to temperature readings taken at the same time (i.e. have been measured at the same time). In another example, the determined pipe temperature and the determined ambient temperature do not correspond to (i.e. been measured at) the same time but correspond to two different times within a given time window. In embodiments, the given time window can be up to 2 minutes, up to 5 minutes, or up to 10 minutes. In one example, the given time window is 1-2 minutes. The water header tank presence detection module 106a may be configured to continuously receive temperature data corresponding to individual temperature readings from the first and second temperature sensors (114, 120). In this case, the water header tank presence detection module 106a determines a temperature delta after each set of data points, corresponding to a pipe temperature and ambient temperature, are received from the first and second temperature sensors.

Alternatively, the water header tank presence detection module 106a may be configured to receive multiple data points from each of the first and second temperature (114, 120) sensors corresponding to data taken over a period of time. In this case the water header tank presence detection module 106a is configured to determine multiple temperatures of both the pipe temperature and the ambient temperature and determine a temperature delta for each of the corresponding determined temperatures (determined in steps 204 and 206).

The process of 200a may be performed continuously. The process 200a may be performed in response to the water header tank presence detection module 106a receiving data from any of the first and second temperature sensors. In another example, process 200a may be performed at regular or irregular time periods, or in response to the water header tank presence detection module 106a receiving an instruction to perform the process 200a.

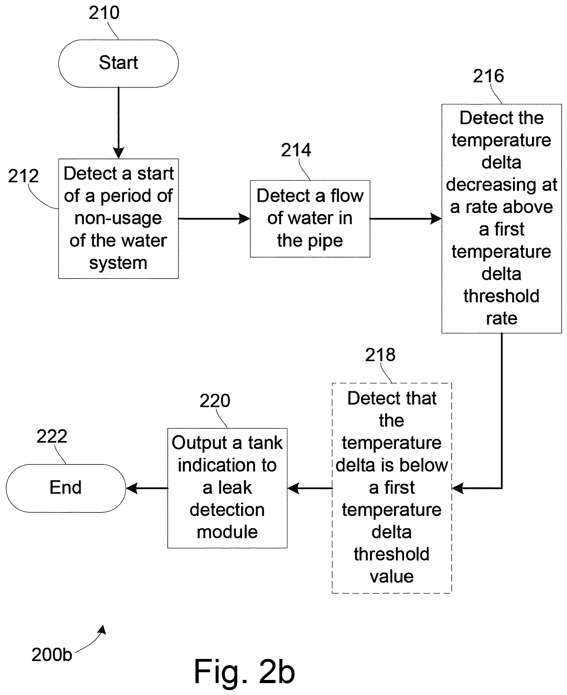

Figure 2b shows flow diagram 200b. The steps of method 200b are carried out by water header tank presence detection module 106a, for determining if a water system 128 comprises a water header tank 130. The process starts at step 210.

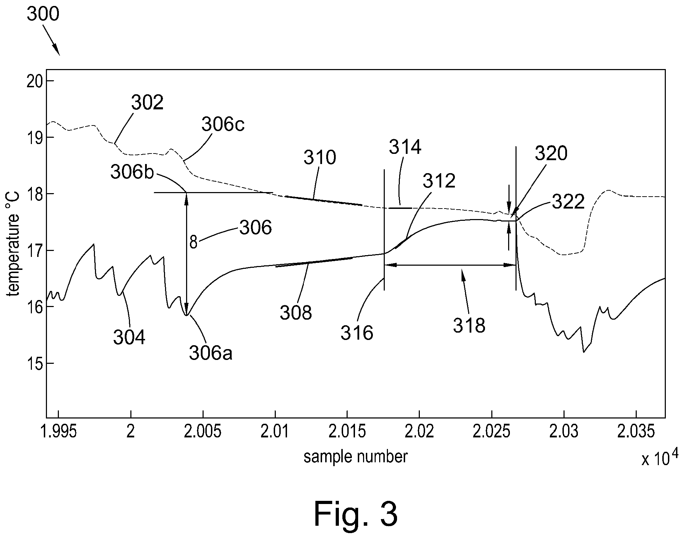

Water header tank presence detection module 106a detects a start of a period of non-usage of the water system (step 212). Example embodiments of how the water header tank presence detection module 106a detects the start of a period of non-usage of the water system will be explained below with ref to Fig. 3 - 7. However, generally speaking, the water header tank presence detection module 106a determines the start of a period of non-usage of the water system by analysing the determined temperature delta over a period of time. Determining a period of non-usage can also be referred to as determining a 'quiet period', regardless of which term is used, they both refer when there is no water usage in the water system 128. Methods of determining a 'quiet period' can be found the aforementioned prior art, for example (PCT/GB2016/050021; Bailey). We describe that quiet periods can be determined by analysing multiple determined temperature data points using a second differential filter or other U shaped convolution filter.

During a quiet period, the water header tank presence detection module 106a is configured to determine the rate of change for multiple values, either continuously or at intervals. Such multiple values may include the determined ambient temperature, determined pipe temperature, and the determine temperature delta. The water header tank presence detection module 106a is configured to determine a rate of change by calculating a difference between two determined pipe (or ambient) temperatures and dividing the outcome by the separation in time between the two determined pipe (or ambient) temperatures. To determine the rate of change of the temperature delta, the water header tank presence detection module 106a is similarly configured to calculate a difference between two determined temperature deltas and dividing the outcome by the separation in time between the two determined temperature deltas. The separation in time corresponds to the separation in time between the measurement of the first and second value. Therefore, the calculated separation in time does not necessarily correspond to a separation in time between the water header tank presence detection module 106a receiving (or determining) the first and second value. Alternatively, the water header tank presence detection module 106a may be configured to use a linear regression fit or similar to determine the rate of change of values over a longer period of time comprising a higher number of samples (e.g. 10 samples at 100 second intervals). Where the samples correspond to a measured (and/or determined) pipe temperature, ambient temperature and/or temperature delta.

In response to step 212, the water header tank presence detection module 106a is further configured to detect a flow of water in the pipe 12a (step 214). Generally speaking, to perform this detection, the water header tank presence detection module 106a analyses multiple determined delta measurements of determined temperature deltas (determined in step 208 of figure 2a). The water header tank presence detection module 106a may additionally or alternatively analyse multiple determined pipe temperature (determined in step 204) over time. Further detail of how the water header tank presence detection module 106a detects flow of water in the pipe 12a is explained below with ref to Fig. 3 - 7.

In response to the detection of a flow of water in pipe 12a by the water header tank presence detection module 106a, the water header tank presence detection module 106a is further configured to detect a decrease in the determined temperature delta over time. More specifically, the water header tank presence detection module 106a is configured to detect that the rate of change of the determined temperature delta is above a first temperature delta threshold rate (step 216). Physically, this may be due to a completion of a water header tank being filled. This is because when water is flowing due to a header tank filling, the rate at which the pipe temperature and the ambient temperature tend towards one another may have been zero or negative, which corresponds to no convergence and divergence (of the pipe and ambient temperatures) respectively. Upon completion of the water header tank filling, a decrease of the temperature delta over time (where the decrease is occurring at least as quickly as a first temperature delta threshold rate) may be detected. The first temperature delta threshold rate can be stored in memory 108, alternatively the value can be received by the water header tank presence detection module 106a via the interface 134 from a third party, for example from the cloud

In other words, in step 216, the water header tank presence detection module 106a is configured to detect that the temperature delta is decreasing quickly, where quickly can be defined as decreasing at a rate which is higher than the first temperature delta threshold rate. For example, if the first temperature delta threshold rate is x C/s, and the water header tank presence detection module 106a detects, by analysing multiple determined temperature deltas, that the determined temperature delta is decreasing at a rate of y C/s, (where the modulus of y is greater than the modulus of x) then step 216 has been performed.. As an example, and in reference to figure 3, the rate of change of the temperature delta at point 308 (which in this example is during a time when water is flowing due to the filling of a water header tank) is approximately 0.0001C/sec, but may be 2-3 times that value in other examples. In other words, if a header tank is filling, the rate of change of the temperature delta may range from 0.0001C/s to 0.0003C/s. In comparison, the rate of change of the temperature delta at point 312, which is after a header tank has stopped filling, may be between 0.0002C/sec and 0.001C/sec. In an embodiment, the first temperature delta threshold rate may be between 0.0002C/s and 0.001C/s. For example, the first temperature delta threshold rate may be 0.0002C/s, 0.0003C/s or any other value in this range.

Therefore, following step 216, the water header tank presence detection module 106a may output a tank indication to a leak detection module. This is because the water header tank presence detection module 106a has detected the features of a start of a period of non-usage of the water system, followed by detecting a flow of water in the pipe, further followed by detecting the temperature delta decrease at a rate above a first temperature threshold rate. These features together indicate that the water system is likely to comprise a water header tank.

As an optional step, , in response to the detection of step 216, the water header tank presence detection module 106a is configured to detect that the temperature delta is below a first temperature delta threshold value (step 218). The first temperature delta threshold value is a value that is stored in memory 108, alternatively the value can be received by the water header tank presence detection module 106a via the interface 134 from a third party, for example from the cloud. Step 218 can provide a further indication (in addition to step 216) that header tank 130 has finished filling up, where the header tank has been filing up using water provided by pipe 12a.

The water header tank presence detection module 106a is configured to perform step 220 in response to step 216, and optionally in response to step 218. The water header tank presence detection module 106a outputs a header tank indication to a leak detection module (110 and/or 126). The leak detection module may be on the fluid flow detector 102 (i.e. leak detection module 110). There may additionally or alternatively be a leak detection module on an external leak detection unit 104 (i.e. leak detection module 126), if this is the case then water header tank presence detection module 106a outputs the header tank indication to a processor 122 on the external leak detection unit 104, via interface 116. The leak detection module (124, 110) utilises the header tank indication in a leak detection process. In other words, leak detection module (110, 126) is configured to change a process for determining a leak in water system 128 upon receipt of the header tank indication from water header tank presence detection module 106a. Process 200b ends at 222, however the process may start at 210 upon completion of step 222. Water header tank presence detection module 106a may further be configured to run process 200b continuously or at intervals.

The header tank indication may be a digital message comprising the likelihood that a water system comprises a water header tank. In embodiments, the header tank indication indicates that a header tank 130 is present in a water system 128. The header tank indication may indicate to a leak detection module (110, 126) to modify the method used (by the leak detection module) to detect leaks. For example, the method used to detect leaks may be modified to only analyse data corresponding to a time after the water header tank has stopped filling. The leak detection module may determine when the water header tank has stopped filling. The header tank indication may be a discrete indication that there is a header tank present. There may be further information provided in the indication, including data received from the temperature sensors, or instructions for the recipient (human or a processor) to perform upon receipt of the header tank indication.

Figure 3 shows a graph 300 of the determined ambient temperature (dashed line 302) and pipe temperature (solid line 304) over time, where the time is represented in units of a sample number of data points received by processor 106. As can be seen from the horizontal axis labelled 'sample number', the range of sample numbers ranges approximately from 19950 to 20350. In this example, each temperature reading of the pipe is separated by 100 seconds, each ambient temperature reading is also separated by 100 seconds. Figure 3 is an example representation of the output of process 200a. The analysis exemplified in process 200b can be exemplified in reference to fig. 3.

A quiet period, or period of non-use, is depicted between points 306a and 322. The water header tank presence detection module 106a is be configured to detect a start of a period of non-usage of the water system at point 306a on figure 3. The numerous peaks and troughs of the pipe temperature 304 (i.e. prior to point 306 and after point 322) generally correspond to uses of the water system, for example, running a bath, flushing a toilet and running a washing machine.

Point 306 shows an example of a temperature delta. In embodiments, the temperature delta is a difference between the trough in the water temperature (306a) and an average air temperature (306b). In this example embodiment, the average air temperature (306b) has been calculated over the range between points 306c and 320. In other examples an average air temperate can be calculated from a smaller time range than the example of points 306c to 320. In embodiments, an instantaneous value of air temperature can be used in place of an average. However if the air temperature varies substantially over the course of the measurements of air temperature then using an average air temperature will result in a more accurate value of temperature delta than would be achieved by using an instantaneous value of air temperature.

Point 308 depicts a point when the rate of change of the pipe temperature is below a threshold value (for example, below 0.005C per 100 seconds). The low rate of change indicates that the pipe temperature has stabilised sufficiently to indicate that it is likely there is a steady flow of water (which may be flow into a water header tank). Physically this is because a low flow of water results in the pipe temperature approximately stabilising at a temperature different to the ambient temperature, rather than tending towards the ambient temperature. Point 308 corresponds to step 214 in fig. 2, in other words, the water header tank presence detection module 106a detects a flow of water in the pipe by detecting a rate of change of the pipe temperature drops below a threshold value. There are other methods that the water header tank presence detection module 106a may use to to detect a flow of water in the pipe, for example, determining that a rate of change of a delta is below a threshold value.

Point 310 shows a rate of change of ambient temperature. If the rate of change 310 is below an upper positive bound and above a lower negative bound, then it may be determined that the pipe temperature fluctuation is due to a change in the water flow. If the air temperature rate of change 310 is outside these bounds then it may be determined that the pipe temperature fluctuation is due to a reason other than a change in water flow, for example the pipe temperature fluctuation may be due to heating or cooling from another source (e.g. open window, central heating). An example value for the upper and lower bound is 0.0001C/sec and -0.0001C/sec respectively. Although the rate of change at the point 310 has been shown in this example, the rate of change of air temperature may be monitored through the process 200a and/or 200b. For example, the rate of change between points 306c and 322 may be monitored. If it is determined that the rate of change of the air temperature falls outside the upper positive bound and the lower negative bound at any time during a period then it may be determined that a water header tank indication (and/or a leak detection indication) cannot be determined using data from the period.

Points 312 and 314 represent a point in time where the water header tank presence detection module 106a is configured to detect that the temperature delta is decreasing above a certain rate. For example in figure 3, the rate of change of the pipe temperature rises above a certain value (approximately 0.01C per 100 seconds) at 312 over a given time period, whilst the ambient temperature is relatively stable over the given time period, this results in the temperature delta decreasing at a certain rate (approximately 0.01C/s). Optionally, the water header tank presence detection module 106a may be configured to detect that the rate of change of the ambient temperature (314) is below a threshold, (for example, below 0.01C per 100 seconds) indicating that the ambient temperature is stable and the detected rise in the pipe temperature has not been caused by an external heat source that is heating both the pipe and the ambient. A detection of a stable ambient temperature and a detection of a decreasing pipe temperature may cause the water header tank presence detection module 106a to detect a temperature delta decreasing at a rate above a first temperature delta rate. As an example, if the water header tank presence detection module 106a detects that the temperature delta is decreasing at approximately 0.0001C/s then the water header tank presence detection module 106a will determine that the flow of water in the pipe is continuing, this flow may be due to a water header tank filling or may be due to a leak. However, if the water header tank presence detection module 106a further detects that the temperature delta is decreasing at, for example, more than a value ranging from 0.0002C/s to 0.001C/s, then the water header tank presence detection module 106a will determine that the pipe temperature is starting to tend towards the ambient temperature and further determine it is likely that there has been a decrease in the flow of water in the pipe. This enables the water header tank presence detection module 106a to determine that there is a water header tank because a sharp decrease in temperature delta (316) has followed a detection of a flow of water (308).
Following a completion of the filling of the water header tank, there will either be: no flow of water in the pipe, which will be the case if there is no leak; or there may be residual flow in the pipe due to a leak. However, in either scenario, the water header tank presence detection module 106a is still able to determine whether a water header tank is present or not.

The point in time (referred to as a fill time) that the water header tank presence detection module 106a determines that the flow of water in the pipe has ceased (and/or reduced), i.e. point 316, can be stored in memory 108. The fill time may be output by water header tank presence detection module 106a to the leak detection module 110.

After 312 of figure 3, it can be seen that the rate of change of the pipe temperature continues to be positive, (resulting in the pipe temperature tending towards the ambient temperature) without the pipe temperature rate of change dropping below a pipe temperature threshold rate (for example below -0.01C per second). The water header tank presence detection module 106a is able to detect this. Therefore, in some embodiments, if after point 312, the rate of change of the pipe temperature were to drop below the pipe temperature threshold rate, a header tank indication may not be output by the water header tank presence detection module 106a because the temperature fluctuation is likely to be caused by another heat source and is not due to a header tank filling, this is an optional feature of the water header tank presence detection module 106a. In embodiments, the water header tank presence detection module is configured to not generate a tank indication if it is determined that the modulus of the rate of change of the temperature delta is changing at a rate which is higher than a second temperature delta threshold rate. This is because if the modulus of the temperature delta rate is high (i.e. if the temperature delta is increasing quickly or decreasing quickly), then the high rate of change of the temperature delta may be due to factors other than a filling of a header tank. For example, the temperature delta rate may increase if a nearby heating unit switches on. Another factor may be due to the use of the water system by a user. Factors such as this effect the accuracy of the determination of the header tank indication.

It can be seen that the temperature delta at point 320 is much smaller compared to the temperature delta at, for example 306. In optional step 218 of figure 2b, the water header tank presence detection module 106a is configured to detect the temperature delta is below the first temperature delta threshold, such as is represented in point 320.

The time period 318 can be defined by water header tank presence detection module 106a as the time that pipe temperature takes to converge to the ambient temperature after the header tank has stopped filling. In other words, 318 can be defined as the time period between the point at which the water header tank presence detection module 106a determined that the header tank has stopped filling (i.e. the 'fill time') and the point at which the water header tank presence detection module 106a detects that the temperature delta is small enough to indicate that the pipe temperature has converged to the ambient temperature.

A straight-line regression can be fitted to both the ambient and the pipe temperature The regression can be defined as good by a goodness of fit measure such as r-squared is above a threshold, or a maximum residual value is below a threshold.

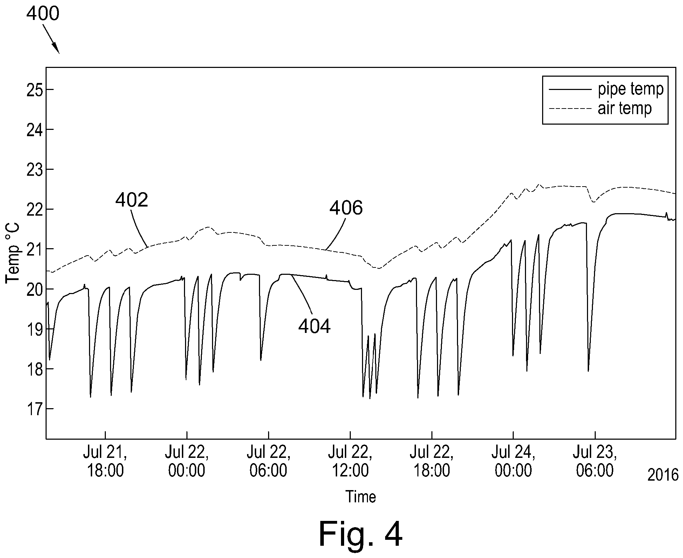

Figure 4 shows a graph 400 of the pipe temperature 404 (solid line) and ambient temperature 402 (dashed line) measured by fluid flow detector 102, where fluid flow detector has a temperature sensor in thermal contact with the pipe. The graph 400 corresponds to a water system that could have a leak.

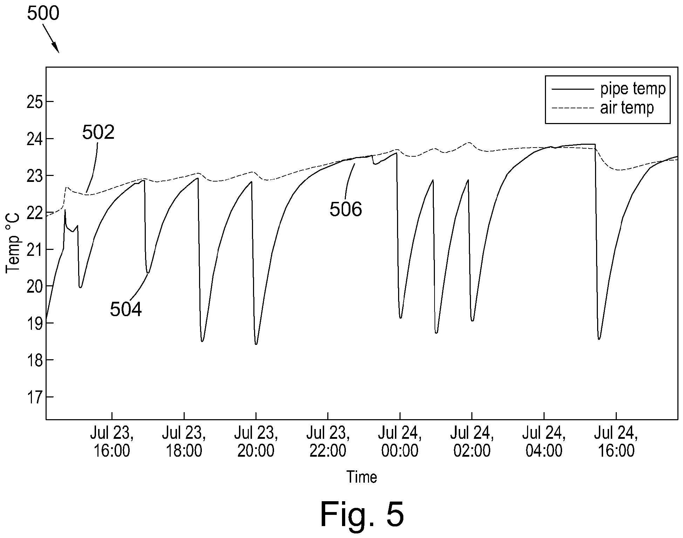

Figure 5 shows a graph 500 of the pipe temperature 504 (solid line) and ambient temperature 502 (dashed line) measured by fluid flow detector 102, where fluid flow detector has a temperature sensor in thermal contact with the pipe. The graph 500 corresponds to a water system with no leak.

The temperature delta is graphically represented by a vertical separation between the pipe and ambient temperature in graphs 400 and 500. the temperature delta is larger in a system that could have a leak compared to a system with no leak. This can be seen from comparing the temperature deltas at points 406 and 506. For example, the vertical separation between the pipe and ambient temperature is approximately 1 degree Celsius at point 406 (in figure 4) whereas the vertical separation is negligible at point 506 (figure 5).

Whilst it may be determined that a temperature delta such as the temperature delta at 406 could be due to a leak, the inventors have appreciated that such a temperature delta (as at point 406) could also be caused by a steady flow of water through the pipe to fill a header tank.

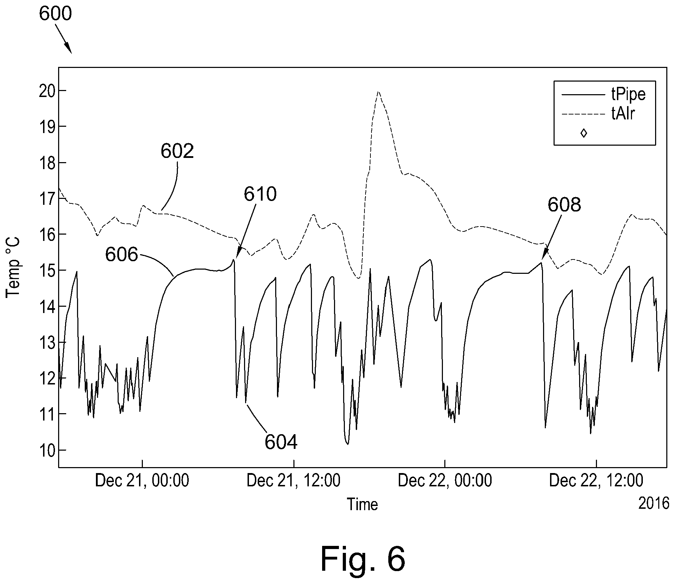

Figure 6 shows a graph 600 of the pipe temperature 604 and ambient temperature 602 measured by fluid flow detector 102, where the fluid flow detector has a temperature sensor 114 in thermal contact with the pipe 12a.

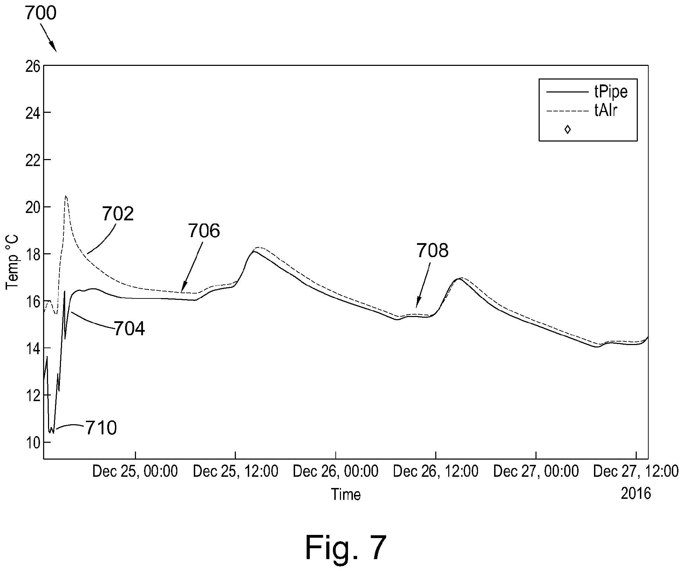

Figure 7 shows a graph 700 of the pipe temperature 704 and ambient temperature 702 measured by fluid flow detector 102, where fluid flow detector has a temperature sensor 114 in thermal contact with the pipe 12a.

It can be seen in graphs 400, 500, 600, 700 that the pipe temperature is lower than the ambient temperature. This is typically the case in the UK. However in some climates and occasionally in the UK summer, the temperatures are reversed and pipe temperature is higher than the ambient/air temperature. The presented methods of determining if a water header tank (130) is present in a water system (128) will work for either scenario. In other words, the presented methods of determining if a water header tank (130) is present in a water system (128) are able to accurately determine if a water system 128 comprises a water header tank 130 regardless of whether the pipe temperature is higher, or lower, than the ambient temperature. This is primarily because the presented methods utilise the absolute temperature difference between the ambient and pipe temperature. The absolute temperature difference between the ambient and pipe temperature is also referred to as the temperature delta.

A method of determining if there is a leak present in a water system may involve a temperature delta being measured at a time after a determined non-use period begins. The time after the start of the non-use event, at which the temperature delta is determined, is a time length that is determined to be long enough to allow the temperature of the pipe to stabilise before measuring the delta. As an example, such a time in a typical domestic property (without a water header tank) may be approximately 3 hours. Therefore, if after 3 hours, a determined temperature delta was determined to be higher than a threshold value, then it may be determined that the water system has a leak. In other words, some systems would classify that there is likely a leak present.

In more detail, Fig. 6 shows a graph 600 of determined pipe and ambient temperatures when the fluid flow detector 102 is fitted to a pipe 12a which is feeding a slowly filling water header tank 130. It can be seen (between points 610 and 606) that rather than the temperature delta being stable as in the temperature around point 406 in Fig 4, after a period of time the temperature delta of figure 6 starts to reduce relatively quickly and then exponentially approach the ambient temperature (point 610). Water header tank presence detection module 106a is configured to determine that such a behaviour indicates that the flow of water in the pipe has stopped, which would not be the case if a leak was present in the water system 128, but would be the case if a water header tank 130 was being filled but has now been fully replenished.

As leak detection module 110 (and/or leak detection module 126) is configured to discriminate between the situation in Fig 6 and the situation in Fig. 4, then advantageously, a fluid flow detector 102 can avoid classifying as a leak flow that is caused by a header tank 130 filling slowly.

An example embodiment is now described of an algorithmic process carried out by leak detection module 110 (and/or leak detection module 126) which can be used to discriminate between a genuine continuous leak, and flow which stops when the header tank fills.

By measuring the rate of change of the pipe temperature (for example by using a second differential filter) and comparing the rate of change of the pipe temperature to a threshold, the water header tank presence detection module 106a and/or leak detection module 110 are able to distinguish when intermittent normal usage has stopped for an extended period of time (referred to as a quiet period) which will typically happen overnight, and hence when all normal flow would have been expected to have stopped.

If there is a leak, a quiet period would normally end with an increase in flow when water is used by the water system, for example when a user of the water system uses water in the morning following the start of the quiet period. However if the flow reduces at the end of the quiet period, then the water header tank presence detection module 106a is configured to determine that the flow (during the quiet period) was caused by a header tank 130 filling which has now stopped filling, for example because a ball valve of the water system has closed.

If a water header tank presence detection module 106a of the fluid flow device 102 detects (and/or determines) a quiet period based on a determined rate of change of the pipe temperature being below a threshold, then water header tank presence detection module 106a is configured to continue to measure the ambient temperature, pipe temperature, temperature delta, and the rate of change of ambient temperature, pipe temperature and temperature delta. If the temperature delta does not drop below a threshold, indicating there is still water flowing in the pipe, then there is a possibility of either a leak or a water header tank filling.

The water header tank presence detection module 106a may, after a pre-determined period (for example a period between 30 minutes to several days) following the start of the quiet period, detect that the pipe temperature starts to change by moving away from the ambient temperature. If the water header tank presence detection module 106a does detect that the pipe temperature starts moving away from the ambient temperature after the pre-determined time period following the start of the quiet period, then the water header tank presence detection module 106a is configured to determine that water is flowing in pipe 12a and that the cause of the flowing water is likely to be due to normal usage of the water system 102, for example a tap running.

If, however the water header tank presence detection module 106a determines that the rate of change of pipe temperature changes, resulting in the pipe temperature moving towards the ambient temperature, then water header tank presence detection module 106a is configured to determine that the flow in the pipe 12a has reduced. Water header tank presence detection module 106a is configured to determine that the cause of the determined reduced flow in the pipe is likely to be caused by the termination of the filling of water header tank 130. The point at which the water header tank presence detection module 106a determines that the water header tank 130 has stopped filling corresponds to points 610 and 608 in Fig. 6.

Water header tank presence detection module 106a may be configured to determine if the ambient temperature changes at a similar time and similar rate as the pipe temperature. A possible explanation for this is that the location surrounding the fluid flow detector 102 has heated up, for example because a heating system has switched on. Therefore, optionally, the water header tank presence detection module 106a may be configured to not indicate a water header tank is present (and/or that the water header tank is filing) if the water header tank presence detection module 106a determines that the ambient temperature changes at a similar time and similar rate as the pipe temperature.

If the water header tank presence detection module 106a determines that the quiet period (prior to the pipe temperature moving away from the ambient temperature) is short (e.g. short can be defined as less than 2-48 hours), then the water header tank presence detection module 106a is configured to determine that the water header tank may not have had time to fully fill. However, if the water header tank presence detection module 106a determines that the quiet period (prior to the pipe temperature moving away from the ambient temperature) is long (for example, at least greater than 2 hours) then the water header tank presence detection module 106a is configured to determine that the water system is unlikely to comprise a water header tank because a water header tank would have had time to fill during the long quiet period.

Over a series of successive quiet periods, the water header tank presence detection module 106a can determine a number of detected events in which the pipe temperature moves towards the ambient temperature following a period of non-usage and detecting flow in the pipe. The water header tank presence detection module 106a is configured to generate a classification to determine the likelihood of a water header tank 130 being present in the water system 128 based on the detected events. If more than a threshold percentage (for example, where the threshold percentage can have a value ranging from 10% - 25%) of the detected events comprise a quiet period duration above a quiet period duration threshold which may be in the range of 2 - 10 hours, then the water header tank presence detection module 106a is configured to determine that a water header tank is present in water system 128. In an example embodiment, the quiet period duration threshold ranges from 2.7 hours up to 8 hours.

Regarding leak detection, if, after the pipe temperature rate of change increases (indicating a likely header tank has stopping filling), the leak detection module (110 and/or 102) detects that the ambient and pipe temperatures subsequently converge (i.e. the ambient and pipe temperatures with within a threshold of one another) within a predetermined period then the leak detection module (110 and/or 126) determines that no leak is present. If the leak detection module (110 and/or 126) detects a change in the rate of change of the pipe temperature (or of the temperature delta), which generally indicate regular water usage, prior to detecting that the ambient and pipe temperatures have converged then the leak detection module (110 and/or 126) may be configured to determine that it is unknown if there is a leak in the water system 128;. This scenario is exemplified in Fig 7. A last water usage may be indicated by the change in polarity of the rate of change of the pipe temperature (i.e. the turning point at 710). Approximately 18 hours after 710 is point 706. At 706, there is still a non-negligible temperature delta. However 36 hours after the last usage (708), the temperature delta has reduced to close to zero. This indicates that water flow in the pipe has stopped and the temperature delta at point 706 was caused by the water header tank filling over 18 hours. As the temperature delta is below a threshold, the leak detection module 110 (and or 126) determines that no leak is present. The processor 106 can be configured to perform such analysis.

If however, after a predetermined period following the completion of the filling of the water header tank, leak detection module (110 and/or 126) detects that the pipe and ambient temperature delta is above a threshold, then the leak detection module (110 and/or 126) is configured to indicate that a leak is present in the water system 128.

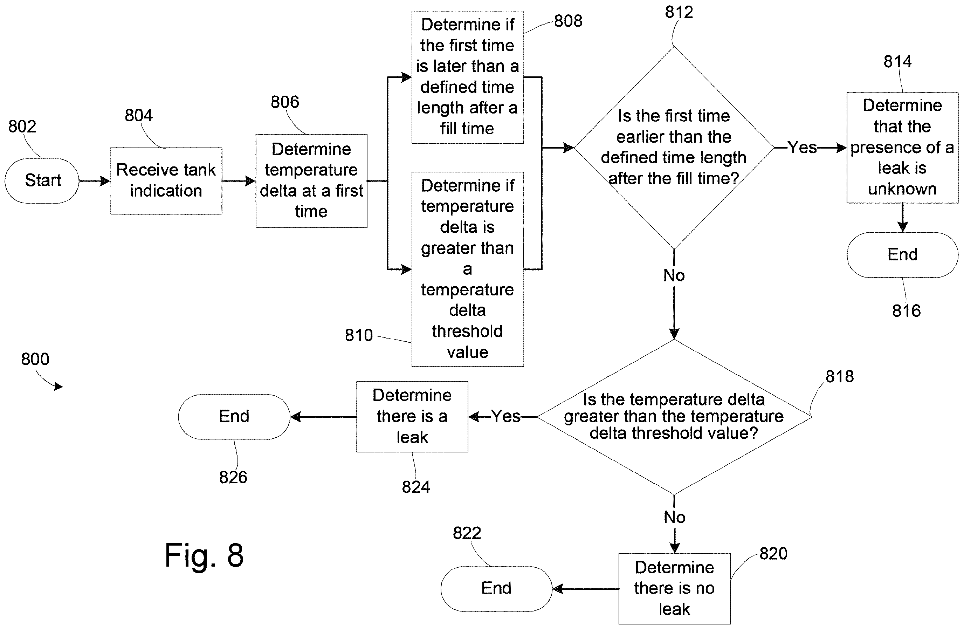

Figure 8 shows a flow diagram 800 for a method of determining if a leak if present in a water system. Processor 106 may be configured to perform the method depicted in figure 8 by running code stored in memory of the leak detection module 110 and/or 126. Additionally or alternative the method of 800 may be performed by processor 122 by running code stored in memory of the leak detection module 126.

Flow diagram 800 starts at 802, leak detection module (110 and/or 126) receives a water header tank indication 804. The water header tank indication may be received in response to the water header tank presence detection module 106a performing the methods of figures 2a-2b. The water header tank indication indicates to the leak detection module (110 and/or 126) that water system 128 comprises a water header tank, or is likely to comprise a water header tank 130. Nonetheless, upon receiving a header tank indication, leak detection module (110 and/or 126) is configured to change the method in which a leak is detected. In absence of receiving a header tank indication, the leak detection module (110 and/or 126) performs known leak detection methods. However, upon receiving a header tank indication, leak detection module (110 and/or 126) is configured to perform a different method of leak determination, at shows in steps 806-826.

Leak detection module (110 and/or 126) is configured to determine a temperature delta at a first time 806 from received temperature data. Leak detection module (110 and/or 126) is configured to determine if the first time is later than a defined time period after a fill time (step 808), where the fill time is the time at which the leak detection module (110 and/or 126) or water header tank presence detection module 106a has determined that the water header tank has finished filling. Leak detection module (110 and/or 126) is further configured to determine if the temperature delta (determined in step 806) is greater than a temperature delta threshold value (step 810). Leak detection module (110 and/or 126) may be configured to perform steps 808 and 810 in any order (including simultaneously). If the leak detection module (110 and/or 126) has determined that the first time is earlier than the defined time length after the fill time (812), the leak detection module (110 and/or 126) determines that the presence of a leak is unknown (step 814) and the process ends (816).

If the leak detection module (110 and/or 126) has determined that the first time is later than the defined time length after the fill time and if the temperature delta is not greater than the temperature delta threshold value (step 818), then the leak detection module (110 and/or 126) determines there is no leak in water system 128 (step 820), the process then ends (826).

If the leak detection module (110 and/or 126) has determined that the first time is later than the defined time length after the fill time and if the temperature delta is greater than the temperature delta threshold value (step 818), then the leak detection module (110 and/or 126) determines there is a leak in water system 128 (step 824), the process 800 then ends (822).

Steps 812 and 818 may be performed in any order (including simultaneously). Furthermore, the leak detection module (110 and/or 126) may be configured to combine any of steps 808, 810, 812, and 818 in different orders (or simultaneously).

Although 826, 822 and 816 show an end to the process, leak detection module (110 and/or 126) may be configured to return to the start 802 (or another step such as step 806) upon reaching steps 826, 822 or 816 and thus leak detection module (110 and/or 126) may be configured to perform method 800 continuously, at intervals, and/or upon receiving a request to do so.

After the end of process 800, the leak detection module (110 and/or 126) may be configured to perform further steps, for example, after determining there is a leak (step 824), the leak detection module (110 and/or 126) may be configured to send an instruction to an alarm unit 818 (or an external alarm via an interface (134). The leak detection module (110 and/or 126) may be configured to send a notification to a user of water system 128 after determining there is a leak (step 824).

Generally speaking embodiments have been described where the pipe temperature is lower than the ambient temperature, however if the pipe temperature is higher than the ambient temperature, then steps of the method may be required to be inverted, for example, so the thresholds are the negative of their values, and the comparators are reversed.

Generally speaking, thresholds vary as linear or non-linear function of the difference between the water temperature, as indicated by a minima or maxima of the extrema in the pipe temperature, and a measure of the recent ambient temperature, for example the instantaneous ambient temperature, an average (e.g. a low pass smoothed, moving average, rolling median etc.) of the ambient temperature over a defined period of time that could be the duration of the quiet period, or could be a longer or shorter history of the air temperature.

Generally, any of the functions described herein can be implemented using software, firmware, hardware (e.g., fixed logic circuitry), or a combination of these implementations. The term "module" as used herein generally represent software, firmware, hardware, or a combination thereof. In the case of a software implementation, the module represents instructions that perform specified tasks when executed on a processor (e.g. CPU or CPUs) e.g. processor 106,122. The instructions can be stored in one or more computer readable memory devices..

While this invention has been particularly shown and described with reference to preferred embodiments, it will be understood to those skilled in the art that various changes in form and detail may be made without departing from the scope of the invention as defined by the appendant claims.

## Claims

1. A water flow detector, the water flow detector comprising a water header tank presence detection module for determining if a water header tank is present in a water system comprising a pipe, the water header tank presence detection module configured to:
determine a plurality of pipe temperatures of the pipe based on temperature data received from a first temperature sensor coupled to said water header tank presence detection module, wherein first temperature sensor is in thermal contact with the pipe;
determine a plurality of ambient temperatures of the environment around said pipe based on temperature data received from a second temperature sensor coupled to said water header tank presence detection module;
determine a plurality of temperature deltas, each of said temperature deltas based on a difference between a pipe temperature of the plurality of pipe temperatures pipe and a corresponding ambient temperature of the plurality of ambient temperatures;
detect a start of a period of non-usage of the water system;
detect a flow of water in the pipe after the start of the period of non-usage of the water system;
analyse a rate of change of the plurality of temperature deltas during the period of non-usage of the water system to detect an interval during which temperature deltas of the plurality of temperature deltas decrease at a rate above a first temperature delta threshold rate, and in response, output a tank indication to a leak detection module, said tank indication indicating that the water system comprises a water header tank.

2. The water flow detector of claim 1, wherein said water header tank presence detection module is further configured to output said tank indication if, after a start of said interval, the water header tank presence detection module detects a temperature delta of the plurality of temperature deltas below a first temperature delta threshold value.

3. The water flow detector of claim 1 or 2, further comprising at least one of the first temperature sensor and the second temperature sensor.

4. The water flow detector of any preceding claim, wherein said water header tank presence detection module is further configured to:
determine said flow of water in the pipe by detecting at least one of:
a rate of change of temperature deltas of the plurality of temperature deltas lower than a second temperature delta threshold rate; and
a rate of change of the pipe temperature lower than a pipe temperature threshold rate.

5. The water flow detector of any preceding claim, wherein said water header tank presence detection module is further configured to determine if the detected temperature delta of the plurality of temperature deltas below a first temperature delta threshold value is approximating to a non-linear approach to zero, preferably the non-linear approach to zero being an exponential approach to zero.

6. The water flow detector of any preceding claim, wherein said water header tank presence detection module is further configured to:
detect the start of the period of non-usage of the water system by:
determining a first period during which there is a detected change in a polarity of a rate of change of the temperature of the pipe; and
analyse a rate of change of the plurality of temperature deltas after said period to detect a second period during which temperature deltas of the plurality of temperature deltas are decreasing.

7. The water flow detector of any preceding claim, said water header tank presence detection module is configured to:
determine if the plurality of ambient temperatures is stable during said interval; and
generate said tank indication only if the plurality of ambient temperature has been determined to be stable during said interval.

8. The water flow detector of any preceding claim, wherein said water header tank presence detection module is further configured to:
analyse a rate of change of the plurality of ambient temperatures during said interval to detect a rate of change of ambient temperatures below an ambient temperature threshold rate and in response determine that the ambient temperature is stable during said interval.

9. The water flow detector of any preceding claim, wherein said water header tank presence detection module is further configured to:
determine a fill time wherein the fill time is a time at which the header tank is determined to have stopped filling.
optionally wherein said water header tank presence detection module is further configured to:
determine said fill time based on a detected ending of said flow of water in the pipe; or
determine said fill time based on a start time of said interval.

10. The water flow detector of any preceding claim, wherein said water header tank presence detection module is further configured to:
determine a first regression for the plurality of ambient temperatures;
determine a second regression for the plurality of pipe temperatures;
optionally wherein any of the first and second regressions are a straight line regression;
optionally, wherein one or more of:
said water header tank presence detection module is further configured to:
determine an r-squared value for each of the first and second regressions;
determine if each of the determined r-squared values are above a regression threshold value; and
output a tank indication if each of the determined r-squared values are determined to be above said regression threshold value;
and
said water header tank presence detection module is further configured to:
determine a residual value for each of the first and second regressions;
determine if each residual value is below a residual threshold value; and
output a tank indication if each residual value is determined to be below said residual threshold value.

11. The water flow detector of any preceding claim, wherein said water header tank presence detection module is further configured to not generate said tank indication if at least one of:
the water header tank presence detection module determines that a modulus of a rate of change of the plurality of temperature deltas during the period of non-usage is above a third temperature delta threshold rate; and
the water header tank presence detection module detects a simultaneous change in plurality of air temperatures and the plurality of pipe temperatures during said period of non-usage.

12. The water flow detector of any preceding claim, wherein either:
a remote leak detection unit comprises said leak detection module, and the water header tank presence detection module is configured to output the tank indication to the leak detection module via a communications interface on said water flow detector; or
the water flow detector comprises said leak detection module.

13. The water flow detector of claim 9, wherein the water flow detector comprises said leak detection module and wherein the leak detection module is configured to:
receive the tank indication, indicating that the water system comprises a water header tank;
in response to receiving said tank indication, the leak detection module configured to:
determine a measurement time of a temperature delta of the plurality of temperature deltas;
determine if the measurement time is later than a convergence time length after said fill time;
determine if said temperature delta of the plurality of temperature deltas is greater than a second temperature delta threshold value;
determine there is a leak in the water system if:
the first time is later than the defined time length after the fill time; and
said temperature delta of the plurality of temperature deltas is above a second temperature delta threshold value;
in response to determining there is a leak in the water system, output a leak indication.

14. A method for generating an indication that a water header tank is present in a water system comprising a pipe, the method comprising:
determining a plurality of pipe temperatures of the pipe based on temperature data received from a first temperature sensor coupled to a water header tank presence detection module, wherein first temperature sensor is in thermal contact with the pipe;
determining a plurality of ambient temperatures of the environment around said pipe based on temperature data received from a second temperature sensor coupled to said water header tank presence detection module;
determining a plurality of temperature deltas, each of said temperature deltas based on a difference between a pipe temperature of the plurality of pipe temperatures pipe and a corresponding ambient temperature of the plurality of ambient temperatures;
detecting a start of a period of non-usage of the water system;
detecting a flow of water in the pipe after the start of the period of non-usage of the water system;
analysing a rate of change of the plurality of temperature deltas during the period of non-usage of the water system to detect an interval during which temperature deltas of the plurality of temperature deltas decrease at a rate above a first temperature delta threshold rate;
and in response, outputting a tank indication to a leak detection module, said tank indication indicating that the water system comprises a water header tank.

15. A non-transitory computer-readable medium for determining if a water header tank is present in a water system comprising a pipe, the non-transitory computer-readable medium storing instructions that, when executed by a processor, cause the processor to:
determine a plurality of pipe temperatures of the pipe based on temperature data received from a first temperature sensor coupled to said water header tank presence detection module, wherein first temperature sensor is in thermal contact with the pipe;
determine a plurality of ambient temperatures of the environment around said pipe based on temperature data received from a second temperature sensor coupled to said water header tank presence detection module;
determine a plurality of temperature deltas, each of said temperature deltas based on a difference between a pipe temperature of the plurality of pipe temperatures pipe and a corresponding ambient temperature of the plurality of ambient temperatures;
detect a start of a period of non-usage of the water system;
detect a flow of water in the pipe after the start of the period of non-usage of the water system;
analyse a rate of change of the plurality of temperature deltas during the period of non-usage of the water system to detect an interval during which temperature deltas of the plurality of temperature deltas decrease at a rate above a first temperature delta threshold rate;
and in response, output a tank indication to a leak detection module, said tank indication indicating that the water system comprises a water header tank.
